# EUROPEAN PATENT APPLICATION

(11) **EP 4 474 963 A1**
(43) Date of publication of application: **11.12.2024**
(21) Application number: 23881496.6
(22) Date of filing: 12.09.2023
(51) Int. Cl.: G06F 3/0481, G06T 19/20

(54) **PAGE SWITCHING METHOD AND APPARATUS, STORAGE MEDIUM, ELECTRONIC DEVICE, AND PROGRAM PRODUCT**

(30) Priority: 28.10.2022 CN 202211336842
(71) Applicant: Tencent Technology (Shenzhen) Company Limited, Shenzhen, Guangdong 518057 (CN)
(72) Inventor: CHEN, Teng, Shenzhen, Guangdong 518057 (CN)
(74) Representative: Gunzelmann, Rainer
(86) International application number: PCT/CN2023/118136
(87) International publication number: WO 2024/087915

(57) **Abstract**

The present application discloses a page switching method and apparatus, a storage medium, an electronic device, and a program product. The method comprises: displaying a first page, wherein the first page has displayed therein at least one virtual object in a first virtual scene; in response to a first magnification operation, executing the following processing: magnifying the first page, and displaying the first page following magnification; and when it is determined that the first amplification operation triggers entering a second page corresponding to a first virtual object in the first virtual scene, switching from displaying the magnified first page to displaying the second page.

## Description

### RELATED APPLICATION

This disclosure claims priority to Chinese Patent Application No. 202211336842.5, entitled "PAGE SWITCHING METHOD AND APPARATUS, STORAGE MEDIUM, ELECTRONIC DEVICE" and filed with the China National Intellectual Property Administration on October 28, 2022.

### FIELD OF THE TECHNOLOGY

This disclosure relates to the field of computer technologies, and specifically, to a page switching method and apparatus, a storage medium, an electronic device, and a program product.

### BACKGROUND OF THE DISCLOSURE

A virtual social scenario generally includes elements such as different scenario areas and virtual characters. The different scenario areas represent different ranges of social scenarios. To increase fun of virtual social interaction, a user may select, based on a requirement of the user, a scenario area such as a friend square or a study room.

In the related art, a scenario area in a next-level scenario or a previous level-scenario is entered by tapping an interactive element. In other words, page switching is implemented through a tapping operation. For example, by tapping a target virtual character, the user may enter a details page of the target virtual character, and then interact with the target virtual character. However, if a current page is magnified and then is switched to the details page, a plurality of operations are required to perform by the user, resulting in a low operation efficiency occurring during page switching.

In view of the foregoing problem, no effective solution has been provided yet.

### SUMMARY

Embodiments of this disclosure provide a page switching method and apparatus, a storage medium, an electronic device, and a program product, to at least resolve a technical problem of low operation efficiency occurring during page switching.

According to an aspect of the embodiments of this disclosure, a page switching method is provided, executable by an electronic device, the method including:
displaying a first page, the first page comprising at least one virtual object in a first virtual scenario; and
performing, in response to a first magnification operation on the first page, the following processing:
   magnifying the first page and displaying the magnified first page; and
   switching, in response to determining that the first magnification operation triggers entering a second page corresponding to a first virtual object in the magnified first page, directly from displaying the magnified first page to displaying the second page.

According to another aspect of the embodiments of this disclosure, a page switching apparatus is further provided, including:
a first display unit, configured to display a first page, the first page comprising at least one virtual object in a first virtual scenario;
a first processing unit, configured to in response to a first magnification operation on the first page, magnify the first page and display the magnified first page; and
a second processing unit, configured to switch, in response to determining that the first magnification operation triggers entering a second page corresponding to a first virtual object in the magnified first page, directly from displaying the magnified first page to displaying the second page.

According to still another aspect of the embodiments of this disclosure, a computer-readable storage medium is further provided, having a computer program stored therein, the computer program being configured to, when run, perform the foregoing page switching method.

According to still another aspect of the embodiments of this disclosure, a computer program product is further provided, including a computer program/instructions, the computer program/instructions, when executed by a processor, implementing operations of the foregoing method.

According to still another aspect of the embodiments of this disclosure, an electronic device is further provided, including a memory and a processor, the memory having a computer program stored therein, the processor being configured to perform the foregoing page switching method through the computer program.

### BRIEF DESCRIPTION OF THE DRAWINGS

The accompanying drawings described herein are used to provide a further understanding of this disclosure, and constitute a part of this disclosure. Exemplary embodiments of this disclosure and descriptions thereof are used to explain this disclosure, and do not constitute any inappropriate limitation to this disclosure. IN ACCOMPANY DRAWINGS:
FIG. 1 is an exemplary schematic diagram of an application scenario of a page switching method according to an embodiment of this disclosure.
FIG. 2 is an exemplary flowchart of a page switching method according to an embodiment of this disclosure.
FIG. 3 is an exemplary schematic diagram (1) of a page switching method according to an embodiment of this disclosure.
FIG. 4 is an exemplary schematic diagram of a magnification center of a first magnification operation according to an embodiment of this disclosure.
FIG. 5 is an exemplary schematic diagram (2) of a page switching method according to an embodiment of this disclosure.
FIG. 6 is an exemplary schematic diagram (3) of a page switching method according to an embodiment of this disclosure.
FIG. 7 is an exemplary schematic diagram (4) of a page switching method according to an embodiment of this disclosure.
FIG. 8 is an exemplary schematic diagram of implementing page switching by continuously performing a first magnification operation according to an embodiment of this disclosure.
FIG. 9 is an exemplary schematic diagram (5) of a page switching method according to an embodiment of this disclosure.
FIG. 10 is an exemplary schematic diagram of implementing page switching by continuously performing a first minification operation according to an embodiment of this disclosure.
FIG. 11 is an exemplary overall flowchart of a page switching method according to an embodiment of this disclosure.
FIG. 12 is an exemplary sequence diagram of a page switching method according to an embodiment of this disclosure.
FIG. 13 is an exemplary schematic structural diagram of a page switching apparatus according to an embodiment of this disclosure.
FIG. 14 is an exemplary schematic structural diagram of an electronic device according to an embodiment of this disclosure.

### DESCRIPTION OF EMBODIMENTS

To make a person skilled in the art better understand solutions of this disclosure, the technical solutions in embodiments of this disclosure are clearly and completely described below with reference to the accompanying drawings in the embodiments of this disclosure. Apparently, the described embodiments are merely some rather than all of the embodiments of this disclosure.

In the specification, claims, and the accompanying drawings of this disclosure, the terms such as "first" and "second" are intended to distinguish between similar objects but do not necessarily indicate a specific order or sequence. Data used in this way is interchangeable in a suitable case, so that the embodiments of this disclosure described herein can be implemented in an order other than those illustrated or described herein. In addition, the terms "comprise", "have", and any variants thereof are intended to cover non-exclusive inclusion. For example, a process, a method, a system, a product, or a device that includes a series of operations or units is not necessarily limited to those explicitly listed operations or units, but may include other operations or units not explicitly listed or inherent to the process, the method, the product, or the device.

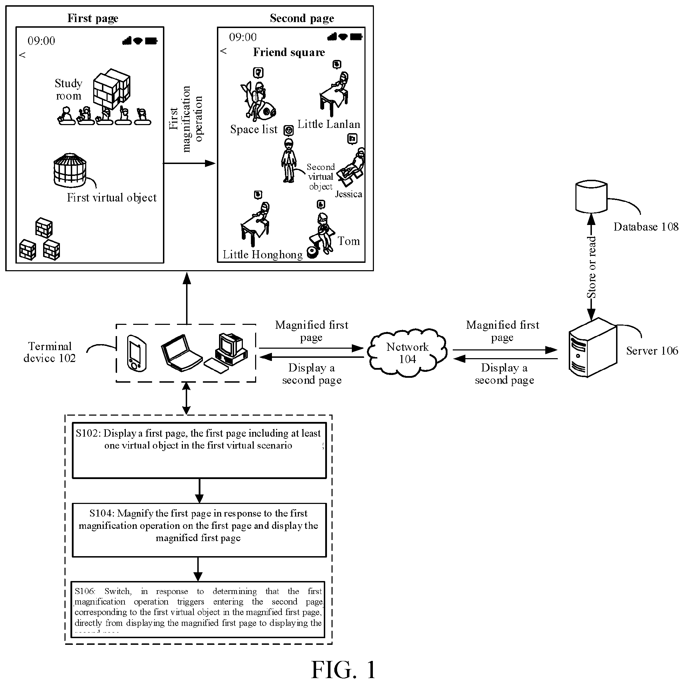

According to an aspect of the embodiments of this disclosure, a page switching method is provided. In an exemplary implementation, the foregoing page switching method may be applied to, but not limited to, an application environment shown in FIG. 1. In the application scenario shown in FIG. 1, a terminal device 102 may, but not limited to, communicate with a server 106 through a network 104. The server 106 may, but not limited to, perform an operation such as a data writing operation or a data reading operation on a database 108. The foregoing terminal device 102 may include, but not limited to, a man-machine interaction screen, a processor, and a memory. The foregoing man-machine interaction screen may, but not limited to, be configured to display a virtual object in a first virtual scenario on the terminal device 102, a second page corresponding to a first virtual object, and the like. The foregoing processor may, but not limited to, be configured to, in response to a man-machine interaction operation, perform a corresponding operation, or generate corresponding instructions and transmit the generated instructions to the server 106. The foregoing memory is configured to store related processing data such as a trigger condition of a first magnification operation and a correspondence between the first virtual object and the second page.

In an exemplary manner, the following operations in the page switching method may be performed on the server 106.

Operation S 102: Display a first page, the first page including at least one virtual object in the first virtual scenario.

Operation S104: Magnify the first page in response to the first magnification operation on the first page and display the magnified first page.

Operation S 106: Switch, in response to determining that the first magnification operation triggers entering the second page corresponding to a first virtual object in the magnified first page, directly from displaying the magnified first page to displaying the second page.

In an exemplary example, execution bodies of the foregoing operations S 102 to S 106 are not limited in the embodiments. For example, the foregoing operations S102 to S106 all may be performed on the terminal device 102 or the server 106, or may be partially performed on the terminal device 102 and be partially performed on an operation server communicating with the server 106.

In the foregoing manner, when the first magnification operation is performed on the first page, and the first magnification operation triggers entering the second page corresponding to the first virtual object in the magnified first page, displaying the magnified first page is directly switched to displaying the second page corresponding to the first virtual object. The first page may be magnified and automatically switched to the second page by performing only a single magnification operation on the first page.

However, in the related art, if a user wants to perform interaction on a magnified page (current page) and continue to perform interaction on a switched page (new page), the user can perform a magnification operation on the current page and perform interaction on the magnified page, but cannot enter the switched page. In addition, a tapping operation further needs to be performed to implement page switching to the new page.

Therefore, in this embodiment of this disclosure, intermediate operating operations are reduced, one action is able to implement a dual function of page magnification and page switching, and operation complexity is reduced, thereby resolving a technical problem of low operation efficiency occurring during page switching, and operation efficiency is improved.

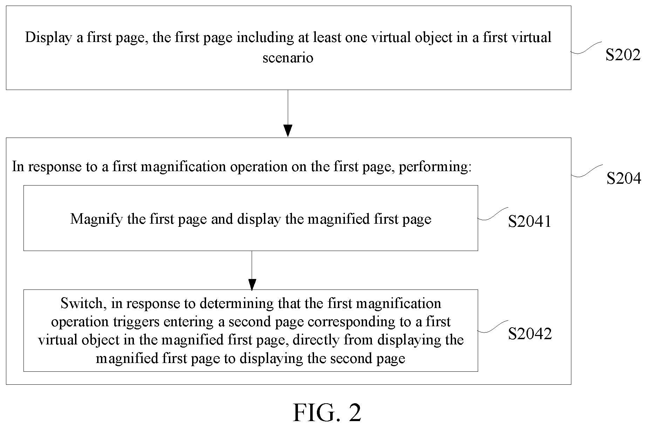

To resolve the foregoing problem of low operation efficiency occurring during page switching, an embodiment of this disclosure provides a page switching method. FIG. 2 is a flowchart of a page switching method according to this embodiment of this disclosure. A procedure includes the following operations.

Operation S202: Display a first page, the first page including at least one virtual object in a first virtual scenario.

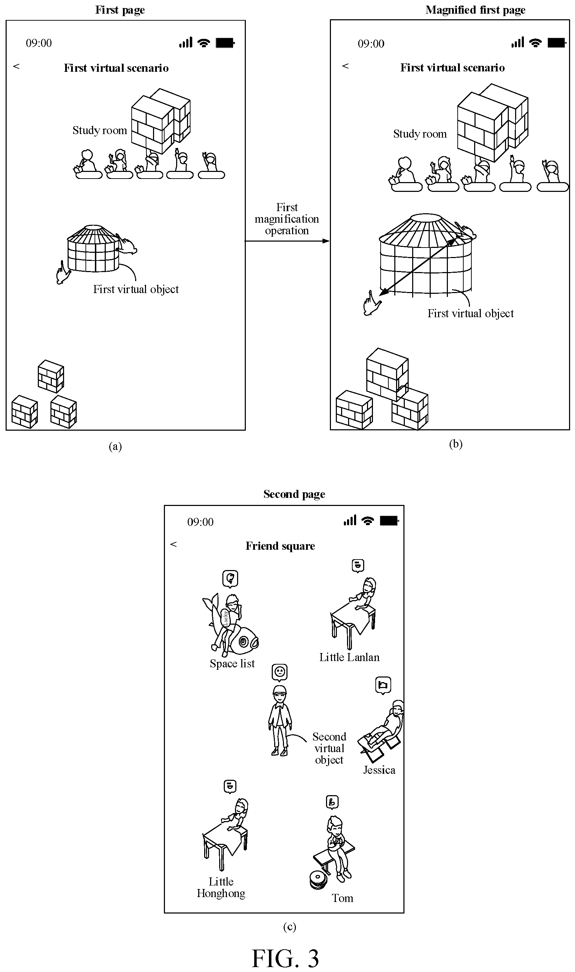

The first virtual scenario on the first page is shown in FIG. 3(a), including, but is not limited to, a plurality of virtual objects such as a virtual building and a virtual character. The virtual objects carry various social entrances in a form of a map. For example, a friend square may be entered through the virtual building. A details page of the virtual character may be entered through the virtual character, for ease of interaction between characters.

Operation S204: Perform the following operations S2041 and S2042 in response to a first magnification operation on the first page.

Operation S2041: Magnify the first page and display the magnified first page.

Operation S2042: Switch, in response to determining that the first magnification operation triggers entering a second page corresponding to a first virtual object in the magnified first page, directly from displaying the magnified first page to displaying the second page.

By performing the magnification operation on the first page, the magnified first page is shown in FIG. 3(b). In addition, when the first magnification operation satisfies a trigger condition, the magnified first page currently shown in FIG. 3(b) is directly switched to the second page as shown in FIG. 3(c). The second page is a page corresponding to the first virtual object which is displayed on the first page and also displayed in the magnified first page.

In the virtual scenario, starting from a top-layer page on which the virtual scenario is located, a user may enter a next-level page through a specified operation level by level. For example, the first page as shown in FIG. 3(a) is switched, through the first magnification operation, to the second page corresponding to the first virtual object shown in FIG. 3(c). The duration of the first magnification operation starts from displaying the first page till displaying the second page. The duration may be divided into two parts, i.e., a first part refers to a duration from displaying the first page till displaying the magnified first page, and a second part refers to a duration from displaying the magnified first page to displaying the second page. Accordingly, the first magnification operation may be divided into two sub-operations respectively corresponding to the first part of duration and the second part of duration. In an example, these two sub-operations may refer to one operation of the user performed respectively within the first part of duration and within the second part of duration. The time interval between ending the one operation within the first part of duration and starting the one operation within the second part of duration may be lower than a preset threshold. For example, the user moves two fingers towards the opposite direction continuously within the first part of duration till displaying the magnified first page, pauses for a short time (which is lower than the preset threshold), and then continues to move till displaying the second page. In another example, these two sub-operations may refer to two different actions of the user performed respectively within the first part of duration and the second part of duration. These two different actions may be performed continuously, or the interval between ending a first operation within the first part of duration and starting a second operation within the second part of duration may be lower than a preset threshold. For example, the user moves two fingers towards the opposite direction (i.e., the first action) continuously within the first part of duration till displaying the magnified first page, and then the user continuously rotates the two fingers in a clockwise direction (i.e., the second action) within the second part of duration till displaying the second page.

In an exemplary example, when the foregoing first magnification operation triggers entering the second page corresponding to the first virtual object in the magnified first page, the switching directly from displaying the magnified first page to displaying the second page corresponding to the first virtual object includes:
in response to determining, based on the first magnification operation, that a magnification factor for magnifying the first page is greater than or equal to a preset threshold and a magnification center of the first magnification operation is located on the first virtual object in the magnified first page,
   determining that the first magnification operation triggers entering the second page; and
   switching directly from displaying the magnified first page to displaying the second page. or
in response to determining, based on the first magnification operation, that a magnification factor for magnifying the first page is greater than or equal to a preset threshold and a center of the magnified first page is located on the first virtual object,
   determining that the first magnification operation triggers entering the second page; and
   switching directly from displaying the magnified first page to displaying the second page.

It is assumed that a default magnification factor is 1. When the magnification factor for magnifying the first page is greater than or equal to 2 and the magnification center of the first magnification operation is located on the first virtual object, the trigger condition for page switching is satisfied. In this way, the displayed magnified first page is directly switched to the second page.

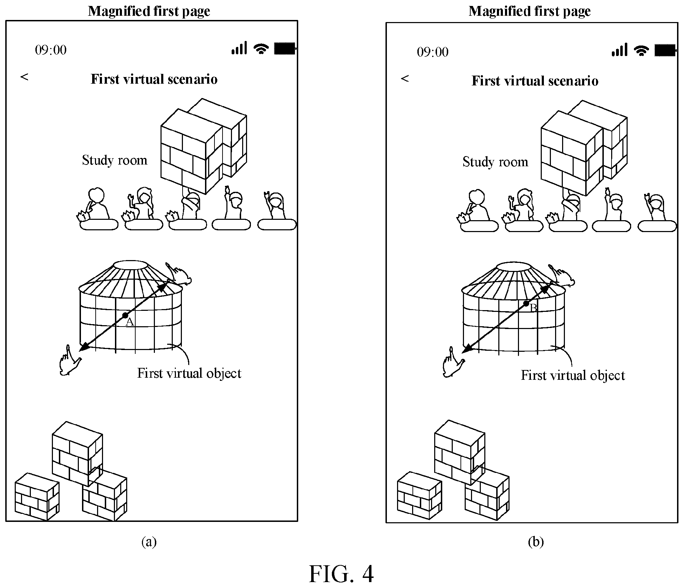

For example, as shown in FIG. 4(a), it is assumed that the first magnification operation is performed on the first page. When the magnification factor for magnifying the first page is equal to 2 and a magnification center A of the first magnification operation is located on the virtual building, page switching is triggered. The currently displayed magnified first page is directly switched to the second page.

For another example, as shown in FIG. 4(b), it is assumed that the first magnification operation is performed on the first page. When the magnification factor for magnifying the first page is equal to 3 and a center point B of the magnified first page is located on the virtual building, page switching is also triggered. The currently displayed magnified first page is directly switched to the second page.

In an exemplary embodiment, when the first magnification operation is a magnification operation triggered by two fingers on a screen, a center between the two fingers on the screen is determined as the magnification center of the first magnification operation.

As shown in FIG. 4(a), the first page is magnified through a moving operation of the two fingers. In this way, a center point A of a connection line between the two fingers may be used as the magnification center of the first magnification operation, but is not limited thereto.

The moving operation of the two fingers may be: keeping a position of a first finger unchanged and moving a second finger in an opposite direction, or simultaneously moving a first finger and a second finger to make a distance between the fingers longer, but is not limited thereto.

In an exemplary example, a center point of a connection line formed by the two fingers placed on initial positions on the first page may be determined as the magnification center of the first magnification operation, or a center point of a connection line formed by positions of the two fingers moving in an opposite direction by a specified distance is determined as the magnification center of the first magnification operation, but the example is not limited thereto.

In another exemplary example, the switching directly from displaying the magnified first page to displaying the second page corresponding to the first virtual object includes:
displaying, when the first virtual object is a virtual building, the second page corresponding to the virtual building, the second page being a details page of the virtual building, the details page of the virtual building comprising a second virtual scenario within the virtual building, the second virtual scenario comprising a virtual character and/or a virtual object in the virtual building; or
displaying, when the first virtual object is a virtual character, the second page corresponding to the virtual character, the second page being a details page of the virtual character, the details page of the virtual character comprising character information of the virtual character.

The first virtual scenario shown in FIG. 3(a) includes, but is not limited to, virtual objects such as the virtual building and the virtual character. In addition, the virtual objects carry various social entrances in a form of a map. For example, when the first virtual object is the virtual building, the first magnification operation is performed, to trigger switching directly from displaying the first page to displaying the second page corresponding to the virtual building. As shown in FIG. 3(c), a plurality of virtual characters in the friend square are displayed, and interaction between the virtual characters is performed in the friend square.

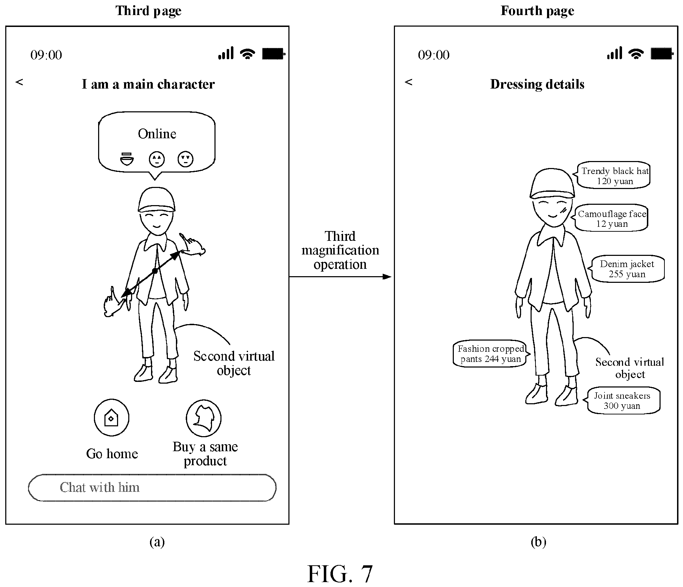

When the first virtual object is the virtual character, the first magnification operation is performed to trigger switching to display the second page corresponding to the virtual character. As shown in FIG. 7, a third magnification operation is performed on a third page on which a second virtual object (a virtual character) is located, to trigger switching to display a fourth page, namely, a details page of the virtual character, and display character information (for example, dressing information of the virtual character) of the virtual character on the details page.

The character information of the virtual character may be, but is not limited to, status information (for example, being online or offline), attribute information (for example, a level, a gender, and an age), wearing information (for example, a hat and glasses), and the like of the virtual character.

It may be learnt from FIG. 3 that the second page is the details page of the virtual building. In other words, the second page is a next-level page of the first page. In addition, the second virtual scenario within the virtual building is displayed on the details page. The second virtual scenario includes, but is not limited to, the virtual character, the virtual object, and the like. The second page as shown in FIG. 3(c) is merely an example and is not limited.

In an exemplary example, the switching directly from displaying the magnified first page to displaying the second page includes:
in response to the first magnification operation not ending after displaying the magnified first page, displaying the magnified first page with a first transparency and displaying the second page with a second transparency, to obtain a transition page, both the first transparency and the second and transparency being lower than 1; and switching from displaying the transition page to displaying the second page.

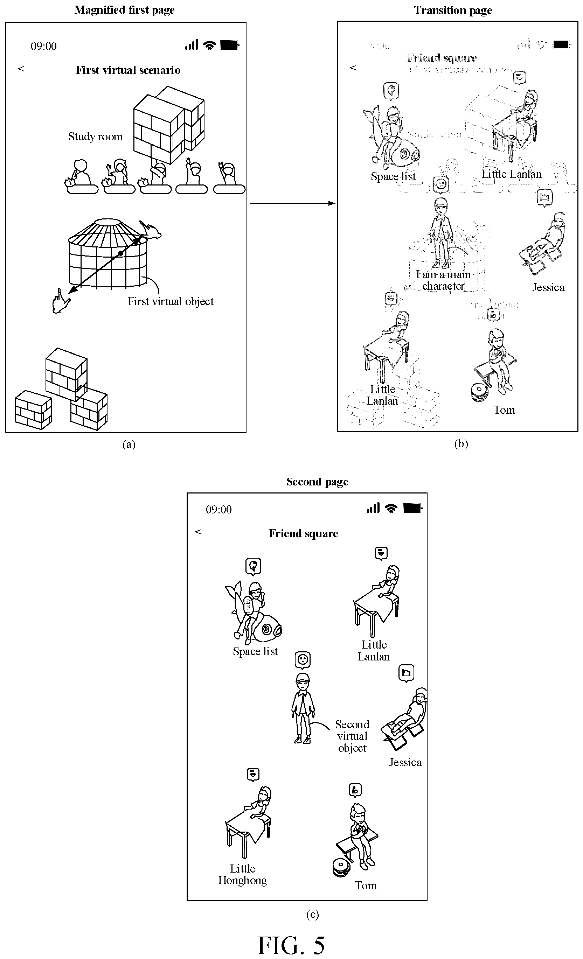

During the process of performing the first magnification operation, it is assumed that the first magnification operation is continuously performed after the magnified first page as shown in FIG. 5(a) appears on the screen. The magnified first page is displayed with a first transparency, and simultaneously on the screen, the second page is displayed with a second transparency. For example, the first transparency can be controlled with an decrement from 1 (means completely non-transparent) to 0 (means completely transparent) , and the second transparency is controlled with an increment from 0 to 1. In this way, the first page is gradually hidden, and simultaneously, the second page is gradually displayed, i.e., a transition page (an animation page) as shown in FIG. 5(b) appears before page switching. The transition page includes the virtual object on the magnified first page and the virtual object on the second page at the same time. In other words, content displayed on the transition page is a superposition of the virtual object on the magnified first page and the virtual object on the second page.

After the transition page as shown in FIG. 5(b) appears, if the first magnification operation continues to be performed, when the magnification factor for magnifying the first page is greater than or equal to a preset threshold and the magnification center of the first magnification operation is located on the first virtual object in the transition page, displaying the transition page as shown in FIG. 5(b) is directly switched to displaying the second page, as shown in FIG. 5(c).

In the foregoing manner, during performing the first magnification operation, page changing may be observed under different views, and whether the first magnification operation continues to be performed, or is canceled, can be controlled by the user based on the views of page changing on the screen, so that a detailed process of page switching can be presented visually, and flexibility of page switching is improved.

In an exemplary example, the second page includes at least one virtual object in the second virtual scenario, and the method further includes:
performing, in response to a second magnification operation on the second page, the following processing:
magnifying the second page and displaying a magnified second page; and
switching, in response to determining that the second magnification operation triggers entering a third page corresponding to a second virtual object in the magnified second page, directly from displaying the magnified second page to displaying the third page.

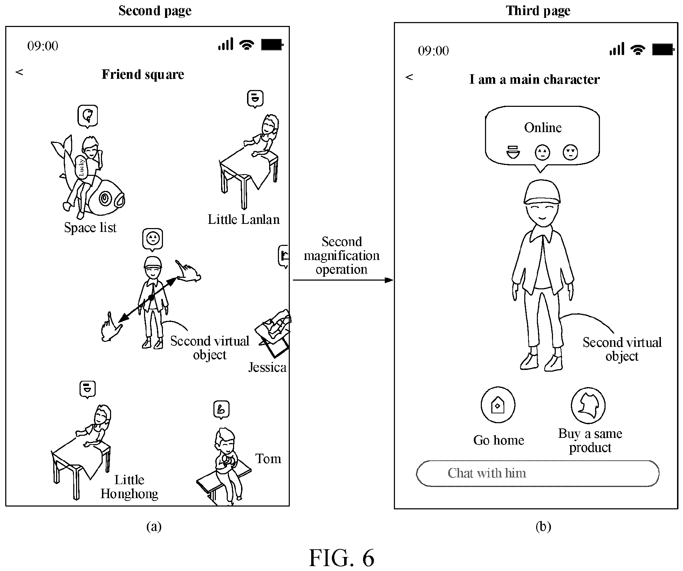

With reference to the descriptions of the foregoing embodiments, after the first magnification operation is performed on the first page, to trigger switching a currently displayed page from the first page to the second page as shown in FIG. 5(c), if the second magnification operation is performed on the second page, for example, as shown in FIG. 6(a), the second page is magnified through a moving operation of two fingers.

When a magnification factor for magnifying the second page is greater than or equal to a threshold b and a magnification center of the second magnification operation is located on the second virtual object in the magnified second page, displaying the second page is directly switched to displaying the third page corresponding to the second virtual object.

For example, when the second magnification operation is performed on the second page, if the magnification factor for magnifying the second page reaches the threshold b (for example, being magnified two times) and the magnification center of the second magnification operation is located on the second virtual object in the magnified second page, the trigger condition for page switching is satisfied, and the currently displayed magnified second page is directly switched to the third page corresponding to the second virtual object. For example, the friend square page is directly switched to a details page of a target virtual character as shown in FIG. 6(b).

A performing process of the second magnification operation is the same as that of the first magnification operation. However, a to-be-satisfied trigger condition for switching from the first page to the second page and a to-be-satisfied trigger condition for switching from the second page to the third page may be the same or may be different. For example, the threshold a to be reached by the magnification factor for magnifying the first page and a value of a preset threshold b to be reached by the magnification factor for magnifying the second page may be the same or may be different.

For any two times of page switching, a threshold for each time is generally set based on a specific scenario. For example, a threshold for page switching is set based on a size of a currently page to be magnified, and a threshold may be set lower when a size of the currently page is small; and the preset threshold may be set higher when a size of the currently page is large.

In an exemplary example, based on a performing process same as the performing processes of the first magnification operation and the second magnification operation, if the third magnification operation is performed on the third page as shown in FIG. 6(b), when a magnification factor for magnifying the third page is greater than or equal to a threshold c and a magnification center of the third magnification operation is located on the second virtual object in the magnified third page, displaying the magnified third page is directly switched to displaying a dressing details page of the second virtual object (a virtual character), as shown in FIG. 7(a) and FIG. 7(b).

By performing different magnification operations on different pages, and when the trigger condition is satisfied, a magnified page is directly switched to a next-level page. This simplifies an operating operation of page switching and improves operation efficiency.

In an exemplary example, the second page includes at least one virtual object in the second virtual scenario, and the method further includes:
performing, in response to the first magnification operation not ending and being continuously performed on the second page, the following processing:
magnifying the second page and displaying a magnified second page; and
switching, in response to determining that the continuously performed first magnification operation triggers entering a third page corresponding to a second virtual object in the magnified second page, directly from displaying the magnified second page to displaying the third page.

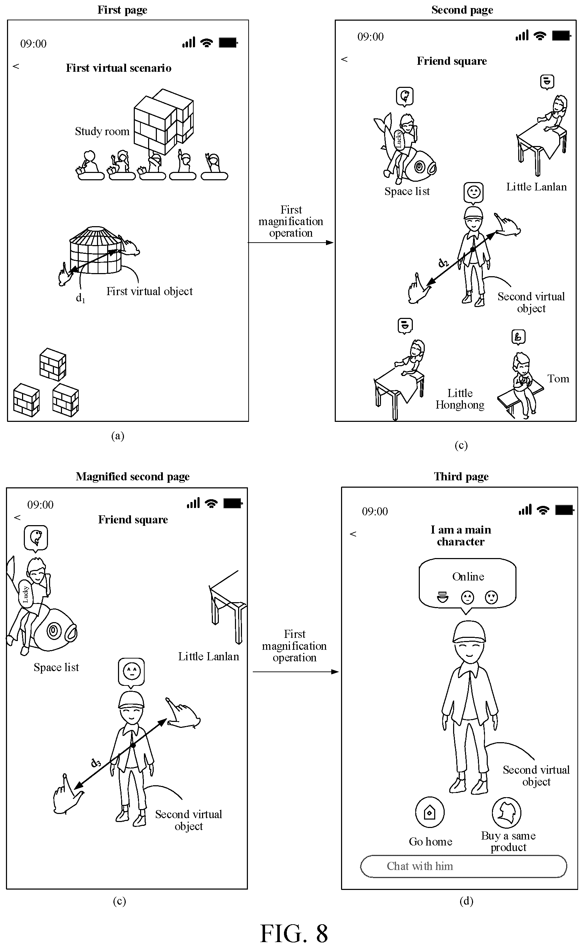

As shown in FIG. 8(a), when the first magnification operation is performed on the first page and the first page is magnified by two times, the displayed first page is directly switched to the second page as shown in FIG. 8(b), and then when the first magnification operation is continuously performed and the second page is magnified by three times, the displayed magnified second page is directly switched to the third page, as shown in FIG. 8(c) and FIG. 8(d).

In other words, after the first page is magnified in response to the first magnification operation and displaying the first page is directly switched to displaying the second page, the second page continues to be magnified in response to the first magnification operation, and the magnified second page is displayed. Until a magnification factor of the magnified second page is greater than the preset threshold, the magnified second page is then directly switched to the third page.

In this embodiment, the first magnification operation is a magnification operation triggered by two fingers on a screen, and the continuously performed first magnification operation indicates that after switching directly from displaying the magnified first page to displaying the second page, the two fingers continue to touch the screen and the two fingers move on the screen in an opposite direction.

In other words, continuously performing the first magnification operation may be understood as: continuously magnifying the screen through continuous moving operations by the two fingers on the screen, and during the continuous magnification, directly switching from the first page to the second page and then directly switching from the second page to the third page, but is not limited thereto.

As shown in FIG. 8(a) and FIG. 8(b), it is assumed that the first magnification operation is the magnification operation triggered by the two fingers on the screen. In addition, when the first magnification operation triggers entering the second page, displaying the first page is directly switched to displaying the second page, and the two fingers on the second page continue to touch the screen, as shown in FIG. 8(b).

When the first magnification operation does not end and is continuously performed, by continuously moving the two fingers, the two fingers move on the screen in an opposite direction, and the magnified second page as shown in FIG. 8(c) is displayed. Finally, when the magnification factor for magnifying the second page is greater than the preset threshold, displaying the magnified second page is directly switched to displaying the third page corresponding to the second virtual object, as shown in FIG. 8(d).

The two fingers move on the screen in an opposite direction, and the first magnification operation is triggered, so that a currently displayed page is switched from the first page to the second page. After the second page is displayed, the two fingers continue to move on the screen in an opposite direction. To be specific, a distance between the two fingers further increases, and the second page is magnified. In other words, a distance d₂ between the two fingers when the second page is displayed is greater than a distance di between the two fingers when the first page is displayed; and a distance d₃ between the two fingers when the magnified second page is displayed is greater than the distance d₂ between the two fingers when the second page is displayed.

In another exemplary example, in a virtual scenario in which man-machine interaction is implemented by using an extended reality (XR) technology, an implementation of the foregoing first magnification operation includes, but is not limited to, one of the following manners.
(1) The foregoing first magnification operation is implemented through a gesture operation when the user performs social interaction in the virtual scenario by using a wearable device.
   For example, when the user wears a head-mounted display, a fully enclosed view is provided for the user, and the first page or the second page is magnified, based on a page in the virtual scenario seen by the user, through a gesture of the user opening both hands.
(2) The foregoing first magnification operation is implemented by using a handle operation device.
   For example, the first page or the second page is magnified through an operation on a button or a combination operation of multiple buttons in a Bluetooth game handle.
(3) The magnification operation on the foregoing first page is implemented in a virtual scenario of an experience game by using a somatosensory game device and through a body movement of the user.

For example, a video motion capture technology is used, and the body movement of the user is analyzed by using camera data. When the body movement follows a preset instruction (for example, opening arms), the first page or the second page is magnified.

By continuously performing the first magnification operation, the first page may be smoothly switched to the third page, avoiding a plurality of magnification operations performed on a plurality of pages, improving continuity of a page switching operation, and increasing fun of virtual social interaction.

With reference to the descriptions of the foregoing embodiments, in the virtual scenario, starting from a top-layer page (or a page on which the virtual scenario is located), the user may enter a next-level page through magnification level by level. Conversely, through a minification operation, a previous-level page may be returned from a bottom-layer page level by level, specifically including:
performing, in response to a first minification operation on the third page, the following processing:
minifying the third page and displaying a minified third page; and
switching, in response to determining that the first minification operation triggers entering the second page, directly from displaying the minified third page to displaying the second page.

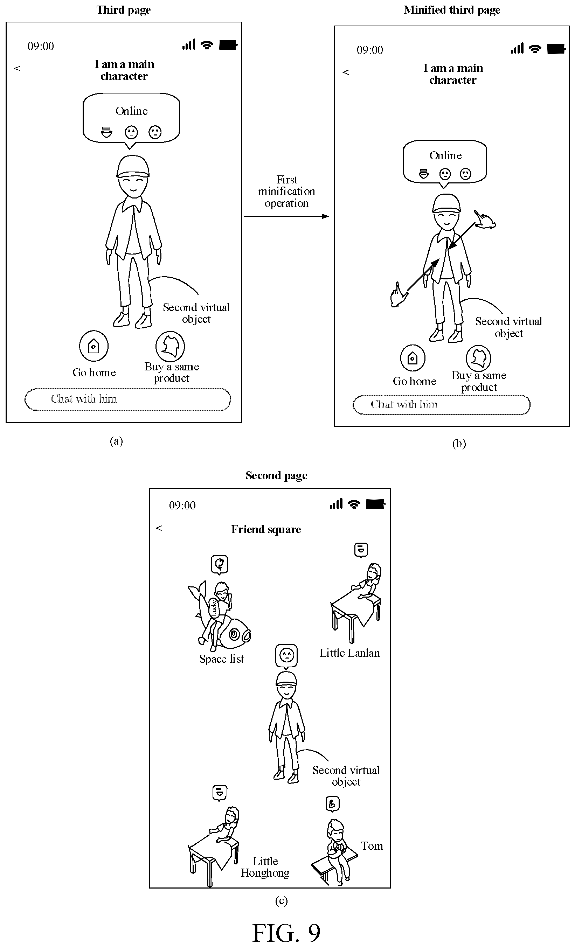

As shown in FIG. 9, when the first minification operation is performed on the third page, the minified third page is displayed in FIG. 9(b). The first minification operation may be moving the two fingers on the screen towards each other, to reduce a display proportion of a currently displayed page with the movement of the two fingers, but is not limited thereto.

When the first minification operation triggers entering the second page, displaying the third page is directly switched to displaying the second page. In an exemplary example, the third page being directly switched to the second page includes:
in response to determining, based on the first minification operation, that a proportion for minifying the third page is less than or equal to a first preset proportion,
determining that the first minification operation triggers entering the second page; and
switching directly from displaying the minified third page to displaying the second page.

As shown in FIG. 9(a) and FIG. 9(b), it is assumed that when the third page is minified to 50% of an original page, the trigger condition of the first minification operation is satisfied, and the second page as shown in FIG. 9(c) is returned from the currently displayed minified third page.

Based on a similar operation, when the virtual object in the second virtual scenario is displayed on the second page, the second page is minified in response to a second minification operation and a minified second page is displayed. Further, when the second minification operation triggers entering the first page displaying the first virtual object, displaying the minified second page is directly switched to displaying the first page.

Through the foregoing embodiment provided in this disclosure, when the first minification operation is performed on the third page, and the first minification operation triggers entering the second page, displaying the third page is directly switched to displaying the second page. In other words, the third page may be switched to the second page only by performing a single minification operation on the third page. This saves one operating operation, reduces operation complexity, and improves operation efficiency.

In an exemplary example, the process of continuously performing the first magnification operation is used. The first page may be smoothly returned from the third page by continuously performing the first minification operation, specifically including:
performing, in response to the first minification operation not ending and being continuously performed on the second page, the following processing:
minifying the second page and displaying a minified second page; and
switching, in response to determining that the continuously performed first minification operation triggers entering the first page, directly from displaying the minified second page to displaying the first page.

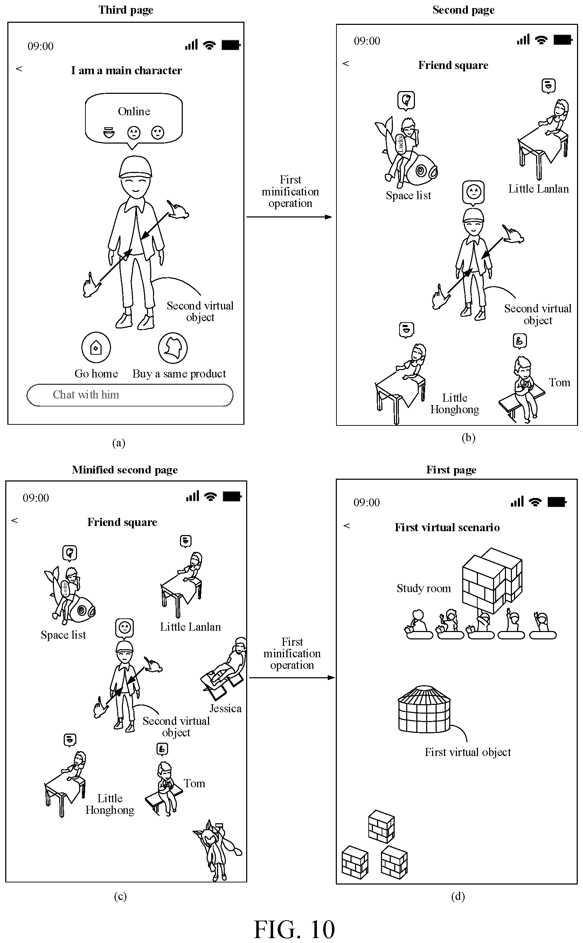

As shown in FIG. 10(a) and FIG. 10(b), it is assumed that the first minification operation is a minification operation triggered by the two fingers on the screen. In addition, when the first minification operation triggers entering the second page, displaying the third page is directly switched to displaying the second page, and the two fingers on the second page continue to touch the screen, as shown in FIG. 10(b).

In an exemplary example, the foregoing first minification operation is the minification operation triggered by the two fingers on the screen, and after the displayed third page is directly switched to the second page, the two fingers continue to touch the screen.

When the second page is displayed and the first minification operation does not end and is continuously performed, the minifying the second page in response to the continuously performed first minification operation and displaying the minified second page includes:

In response to the second page being displayed and the two fingers moving on the screen towards each other, minifying the second page in response to the first minification operation triggered by the two fingers on the screen and displaying the minified second page.

For example, when the first minification operation does not end and is continuously performed, by continuously moving the two fingers on the screen towards each other, the minified second page as shown in FIG. 10(c) is displayed. Finally, when a proportion for minifying the second page is less than or equal to a second preset proportion, displaying the minified second page is directly switched to displaying the first page, as shown in FIG. 10(d).

The two fingers move on the screen towards each other, and the first minification operation is triggered, so that a currently displayed page is switched from the third page to the second page. After the second page is entered, the two fingers continue to move on the screen towards each other. Thus, the distance between the two fingers further decreases, and the second page is minified. In other words, a distance between the two fingers when the second page is displayed is less than a distance between the two fingers when the first page is displayed.

In the foregoing manner, after the third page is minified in response to the first minification operation and displaying the third page is directly switched to displaying the second page, the second page continues to be minified in response to the first minification operation, and the magnified second page is displayed. Finally, when the trigger condition is satisfied, the displayed second page is directly switched to the first page.

By continuously performing the first minification operation, the first page may be smoothly returned from the third page, avoiding a plurality of minification operations on a plurality of pages, and improving continuity of a page switching operation.

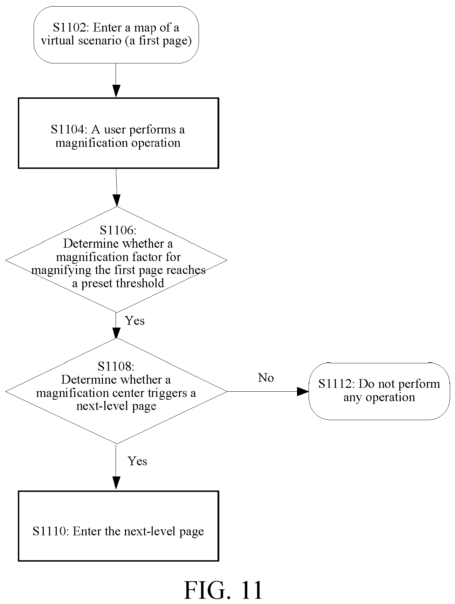

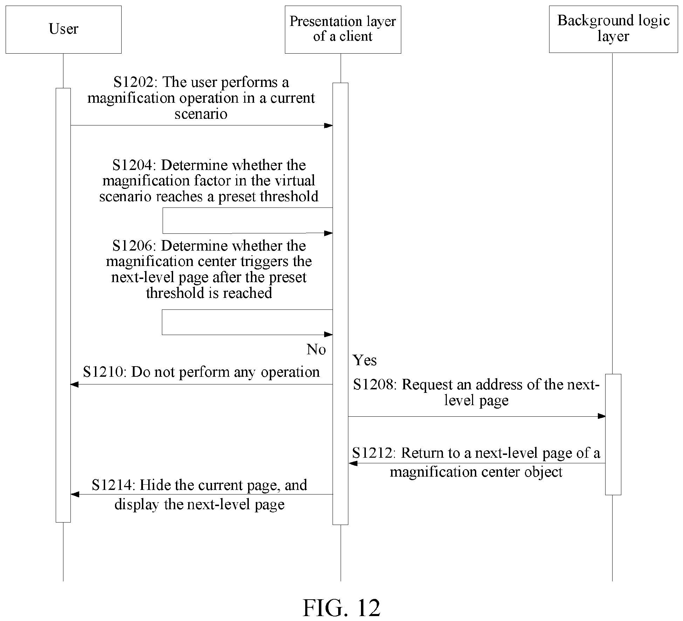

To understand the page switching method in the embodiments of this disclosure more clearly, description is further made below with reference to an overall flowchart shown in FIG. 11 and a sequence diagram shown in FIG. 12.

As shown in FIG. 11, an example in which page switching is implemented by performing a magnification operation is used. Specific operations of the foregoing page switching method include the following operations.

S1102: Enter a map of a virtual scenario, i.e., a first page.

As shown in FIG. 3(a), the map of a virtual scenario may include a virtual building, a virtual character, and the like.

S1104: A user performs a magnification operation in a current scenario.

The current scenario is a first virtual scenario on the first page. As shown in FIG. 3(a) and FIG. 3(b), it is assumed that the user performs a first magnification operation in the first virtual scenario. As two fingers move, a display proportion of the first page increases, and the virtual object in the virtual scenario gets bigger.

The first virtual scenario may be a local virtual scenario on the first page, but is not limited thereto. Besides, the first page may further include another virtual scenario.

51106: Determine whether a magnification factor for magnifying the first page reaches a preset threshold.

For example, as shown in FIG. 3(b), it is assumed that when the first virtual scenario is magnified to twice the size of the first page, a condition of being greater than or equal to a preset threshold 2 is satisfied.

S1108: Determine whether a magnification center triggers a next-level page.

For example, as shown in FIG. 3(b), it is assumed that operation S1110 is performed when the size of the first page is magnified twice and the magnification center is located on the first virtual object. Otherwise, operation S1112 is performed.

The first virtual object is an entrance of a social area. In other words, there is a next-level page corresponding to the first virtual object, for example, a details page corresponding to the first virtual object, i.e., the foregoing second page.

S1110: Enter the next-level page.

For example, switching is performed from a first page as shown in FIG. 3(b) to a second page as shown in FIG. 3(c); or switching is performed from a second page as shown in FIG. 6(a) to a third page as shown in FIG. 6(b).

When page switching occurs, an initial magnification factor of the next-level page is used. For example, a default magnification factor is set to 1.

S1112: Do not perform any operation.

For example, it is assumed that a magnified first page is shown in FIG. 3(b). In this case, if an operation center of the first magnification operation is not located on the first virtual object, the magnified first page as shown in FIG. 3(b) remains unchanged and no operation is performed.

To more clearly understand the foregoing page switching method, the method is described below with reference to the sequence diagram shown in FIG. 12 from an interaction process among a user, a representation layer of a client, and a background logic layer.

S1202: The user performs the magnification operation in the current scenario.

Through interaction between a user side and a client side, the two fingers move on a screen in an opposite direction, thereby performing the magnification operation, for example, performing the first magnification operation in the foregoing embodiment.

S1204: Determine whether the magnification factor in the virtual scenario reaches a preset threshold.

At the client side, whether the magnification factor of the virtual scenario on the current page reaches the preset threshold, for example, whether the magnification factor for magnifying the first page as shown in FIG. 3 is greater than or equal to the first preset magnification factor, is determined. If the preset threshold is reached, operation S1206 is performed.

S1206: Determine whether the magnification center triggers the next-level page after the preset threshold is reached.

As shown in FIG. 4, when the magnification factor of the first page reaches the preset threshold and a magnification center A or B of the first magnification operation is located on the first virtual object, a trigger condition is satisfied, and S1208 is performed. Otherwise, operation S1210 is performed.

S1208: Request an address of the next-level page from the background logic layer.

As shown in FIG. 4, when the magnification factor of the first page reaches the preset threshold and the magnification center A or B of the first magnification operation is located on the first virtual object, an access address of the second page is requested from the background, and S1212 is performed.

S1210: Do not perform any operation.

S1212: Return the access address of the second page to the client.

S1214: Hide the current page and display the next-level page in a display interface of the client.

For example, as shown in FIG. 3, the magnified first page is directly switched to the second page.

Through the foregoing embodiment provided in this disclosure, when the first magnification operation is performed on the first page, and the first magnification operation triggers entering the second page corresponding to the first virtual object in the magnified first page, displaying the magnified first page is directly switched to displaying the second page corresponding to the first virtual object. In other words, the first page may be switched to the second page only by performing a single magnification operation on the first page. This reduces the number of operating operations and reduces operation complexity, thereby resolving a technical problem of low operation efficiency occurring during page switching and improving operation efficiency.

For ease of description, the foregoing method embodiments are described as a series of action combinations. However, a person skilled in the art should know that this disclosure is not limited to the described order of the actions because some steps may be performed in another order or performed at the same time according to this disclosure. In addition, a person skilled in the art is also to learn that the embodiments described in this specification are all exemplary embodiments, and the involved actions and modules are not necessarily required to this disclosure.

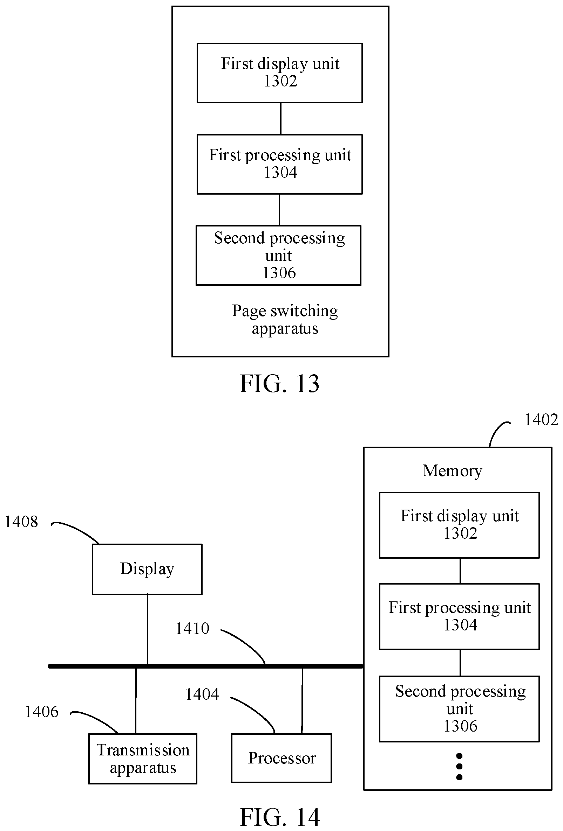

According to another aspect of the embodiments of this disclosure, a page switching apparatus shown in FIG. 13 is further provided, the apparatus including:
a first display unit 1302, configured to display a first page, the first page comprising at least one virtual object in a first virtual scenario;
a first processing unit 1304, configured to in response to a first magnification operation on the first page, magnify the first page and display the magnified first page; and
a second processing unit 1306, configured to switch, in response to determining that the first magnification operation triggers entering a second page corresponding to a first virtual object in the magnified first page, directly from displaying the magnified first page to displaying the second page.

The first virtual scenario on the first page as shown in FIG. 3(a) includes, but is not limited to, virtual objects such as a virtual building and a virtual character. In addition, in the first virtual scenario, the virtual objects carry various social entrances in a form of a map. For example, a friend square may be entered through the virtual building. A details page of the virtual character may be entered through the virtual character, for interaction between characters.

By performing the magnification operation on the first page, the magnified first page as shown in FIG. 3(b) is displayed. In addition, when the first magnification operation satisfies a trigger condition, the currently displayed magnified first page is directly switched to the second page as shown in FIG. 3(c). The second page is a page corresponding to the first virtual object on the first page.

It may be seen from FIG. 3 that the second page is the details page of the virtual building. In other words, the second page is a next-level page of the first page. In addition, the second virtual scenario within the virtual building is displayed on the details page. The second virtual scenario includes, but is not limited to, the virtual character, the virtual object, and the like. The second page as shown in FIG. 3(c) is merely an example and is not limited.

In some embodiments, the foregoing second processing unit 1306 includes:
a first processing module, configured to in response to determining, based on the first magnification operation, that a magnification factor for magnifying the first page is greater than or equal to a preset threshold and a magnification center of the first magnification operation is located on the first virtual object in the magnified first page, determine that the first magnification operation triggers entering the second page; and switch directly from displaying the magnified first page to displaying the second page; or
in response to determining, based on the first magnification operation, that a magnification factor for magnifying the first page is greater than or equal to a preset threshold and a center of the magnified first page is located on the first virtual object, determine that the first magnification operation triggers entering the second page; and switch directly from displaying the magnified first page to displaying the second page.

In some embodiments, the foregoing apparatus further includes:
a third processing unit, configured to determine, in response to the first magnification operation being a magnification operation triggered by two fingers on a screen, a center between the two fingers on the screen as the magnification center of the first magnification operation.

In some embodiments, the foregoing second processing unit includes:
a second processing module, configured to in response to the first magnification operation not ending after displaying the magnified first page, display the magnified first page with a first transparency and simultaneously displaying the second page with a second transparency, to obtain a transition page, both the first transparency and the second and transparency being lower than 1; and switch from displaying the transition page to displaying the second page..

In some embodiments, the second page includes at least one virtual object in a second virtual scenario, and the apparatus further includes:
a fourth processing unit, configured to in response to a second magnification operation on the second page, magnify the second page and display a magnified second page; and
a first switching unit, configured to switch, in response to determining that the second magnification operation triggers entering a third page corresponding to a second virtual object in the magnified second page, directly from displaying the magnified second page to displaying the third page.

In some embodiments, the second page includes at least one virtual object in a second virtual scenario, and the apparatus further includes:
a fifth processing unit, configured to: in response to the first magnification operation not ending and being continuously performed on the second page, magnify the second page, and display a magnified second page; and
a second switching unit, configured to switch, in response to determining that the continuously performed first magnification operation triggers entering a third page corresponding to a second virtual object in the magnified second page, directly from displaying the magnified second page to displaying the third page.

In some embodiments, the first magnification operation is a magnification operation triggered by two fingers on a screen, and the continuously performed first magnification operation indicates that after switching directly from displaying the magnified first page to displaying the second page, the two fingers continue to touch the screen and the two fingers move on the screen in an opposite direction.

In some embodiments, the foregoing second processing unit 1306 includes:
a first display module, configured to display, when the first virtual object is a virtual building, the second page corresponding to the virtual building, the second page being a details page of the virtual building, the details page of the virtual building comprising a second virtual scenario within the virtual building, the second virtual scenario comprising a virtual character and/or a virtual object in the virtual building; or
a second display module, configured to display, when the first virtual object is a virtual character, the second page corresponding to the virtual character, the second page being a details page of the virtual character, the details page of the virtual character comprising character information of the virtual character.

In some embodiments, the foregoing apparatus further includes:
a second display unit, configured to display the third page;
a sixth processing unit, configured to in response to a first minification operation, minify the third page and display a minified third page; and
a third display unit, configured to switch, in response to determining that the first minification operation triggers entering the second page, directly from displaying the minified third page to displaying the second page.

In some embodiments, the foregoing third display unit includes:
a fourth processing module, configured to in response to determining, based on the first minification operation, that a proportion for minifying the third page is less than or equal to a first preset proportion, determine that the first minification operation triggers entering the second page; and switch directly from displaying the minified third page to displaying the second page.

In some embodiments, the foregoing apparatus further includes:
a seventh processing unit, configured to: in response to the first minification operation not ending and being continuously performed on the second page, minify the second page, and display a minified second page; and
an eighth processing unit, configured to switch, in response to determining that the continuously performed first minification operation triggers entering the first page, directly from displaying the minified second page to displaying the first page.

For the embodiment of the page switching apparatus herein, refer to the foregoing embodiment of the page switching method. Details are not described herein again.

According to another aspect of the embodiments of this disclosure, an electronic device for implementing the foregoing page switching method is further provided. The electronic device may be a terminal device shown in FIG. 14. In this embodiment, description is made by using an example in which the electronic device is a background device. As shown in FIG. 14, the electronic device includes a memory 1402 and a processor 1404. The memory 1402 stores a computer program. The processor 1404 is configured to perform the steps in any one of the foregoing method embodiments through the computer program.

In some embodiments, in this embodiment, the foregoing electronic device may be located in at least one of a plurality of network devices in a computer network.

In some embodiments, in this embodiment, the foregoing processor may be configured to perform the following operations by using the computer program.

S1: Display a first page, the first page including at least one virtual object in a first virtual scenario.

S2: Magnify the first page in response to a first magnification operation and display the magnified first page.

S3: Switch, in response to determining that the first magnification operation triggers entering a second page corresponding to a first virtual object in the magnified first page, directly from displaying the magnified first page to displaying the second page.

In some embodiments, a person of ordinary skill in the art may understand that, the structure shown in FIG. 14 is only schematic. The electronic device may alternatively be a target terminal such as a smartphone (such as an Android mobile phone or an iOS mobile phone), a tablet computer, a palmtop computer, a mobile Internet device (MID), or a PAD. FIG. 14 does not limit the structure of the electronic device. For example, the electronic device may further include more or fewer components (such as a network interface) than those shown in FIG. 14, or have a configuration different from that shown in FIG. 14.

The memory 1402 may be configured to store a software program and a module, for example, a program instruction/module corresponding to the page switching method and apparatus in the embodiments of this disclosure, and the processor 1404 performs various functional applications and data processing by running the software program and the module stored in the memory 1402, that is, implementing the foregoing page switching method. The memory 1402 may include a high-speed random access memory, and may further include a non-volatile memory such as one or more magnetic storage apparatuses, a flash memory, or another non-volatile solid-state memory. In some embodiments, the memory 1402 may further include memories remotely disposed relative to the processor 1404, and these remote memories may be connected to the terminal through a network. The foregoing examples of the network include, but are not limited to, the Internet, an intranet, a local area network, a mobile communication network, and a combination thereof. The memory 1402 may be specifically configured to store a trigger condition of the first magnification operation, a correspondence between the first virtual object and the second page, and the like, but is not limited thereto. In an example, as shown in FIG. 14, the foregoing memory 1402 may include, but is not limited to, the first display unit 1302, the first processing unit 1304, and the second processing unit 1306 in the foregoing page switching apparatus. In addition, the memory may further include, but not limited to, other modules and units in the foregoing page switching apparatus. Details are not described herein again.

In some embodiments, the transmission apparatus 1406 is configured to receive or transmit data through a network. Specific examples of the network include a wired network and a wireless network. In an example, the transmission apparatus 1406 includes a network interface controller (NIC). The NIC may be connected to another network device and a router by using a network cable to communicate with the Internet or a local area network. In an example, the transmission apparatus 1406 is a radio frequency (RF) module, and is configured to communicate with the Internet in a wireless manner.

In addition, the foregoing electronic device further includes a display 1408, configured to display a target message transmitted by a target account; and a connection bus 1410, configured to connect various module components in the electronic device.

In other embodiments, the target terminal or the server may be a node in a distributed system, where the distributed system may be a blockchain system, and the blockchain system may be a distributed system formed by connecting a plurality of nodes in through network communication. A peer to peer (P2P) network may be formed between the nodes. A computing device in any form, for example, an electronic device such as a server or a terminal, may become a node in the blockchain system by joining the P2P network.

According to an aspect of this disclosure, a computer program product or a computer program is provided, the computer program product or the computer program including computer instructions, the computer instructions being stored in a computer-readable storage medium. A processor of a computer device reads the computer instructions from the computer-readable storage medium, and executes the computer instructions, so that the computer device performs the page switching method provided in the exemplary implementations in the foregoing aspects such as server verification processing, where the computer program, when run, is configured for performing the operations in any foregoing method embodiments.

In some embodiments, in this embodiment, the computer-readable storage medium may be configured to store a computer program configured to perform the following operations.

S1: Display a first page, the first page including at least one virtual object in a first virtual scenario.

S2: Magnify the first page in response to a first magnification operation and display the magnified first page.

S3: Switch, in response to determining that the first magnification operation triggers entering a second page corresponding to a first virtual object in the magnified first page, directly from displaying the magnified first page to displaying the second page.

In some embodiments, in this embodiment, a person of ordinary skill in the art may understand that all or some of the operations of the methods in the foregoing embodiments may be implemented by a program instructing relevant hardware of the target terminal. The program may be stored in a computer-readable storage medium. The storage medium may comprise: a flash disk, a read-only memory (ROM), a random access memory (RAM), a magnetic disk, or an optical disc.

The sequence numbers of the foregoing embodiments of this disclosure are merely for description purpose, and do not indicate the preference among the embodiments.

When the integrated unit in the foregoing embodiments is implemented in the form of a software function unit and sold or used as an independent product, the integrated unit may be stored in the foregoing computer-readable storage medium. Based on such an understanding, the technical solutions of this disclosure essentially, or the part contributing to the related art, or all or some of the technical solutions may be expressed in a form of a software product. The computer software product is stored in a storage medium and includes several instructions for instructing one or more computer devices (which may be a personal computer, a server, or a network device) to perform all or some of the operations of the methods in the embodiments of this disclosure.

In the foregoing embodiments of this disclosure, the descriptions of the embodiments have respective focuses. For a part that is not described in detail in an embodiment, refer to related descriptions in other embodiments.

In the several embodiments provided in this disclosure, it is to be understood that the disclosed client may be implemented in other manners. The described apparatus embodiments are merely exemplary. For example, the unit division is merely logical function division, and may use other division manners during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the units or modules may be implemented in electronic or another form.

The units described as separate parts may or may not be physically separate, and components displayed as units may or may not be physical units, that is, may be located in one position, or may be distributed on a plurality of network units. Some or all of the units may be selected according to an actual requirement to achieve the objectives of the solutions in the embodiments.

In addition, functional units in the embodiments of this disclosure may be integrated into one processing unit, or each of the units may exist alone physically, or two or more units are integrated into one unit. The integrated unit may be implemented in the form of hardware, or may be implemented in the form of a software function unit.

The foregoing descriptions are exemplary implementations of this disclosure. A person of ordinary skill in the art may make some improvements and modifications without departing from the principle of this disclosure.

## Claims

1. A page switching method, executable by an electronic device, the method comprising:
displaying a first page, the first page comprising at least one virtual object in a first virtual scenario; and
performing, in response to a first magnification operation on the first page, the following processing:
magnifying the first page and displaying the magnified first page; and
switching, in response to determining that the first magnification operation triggers entering a second page corresponding to a first virtual object in the magnified first page, directly from displaying the magnified first page to displaying the second page.

2. The method according to claim 1, wherein the switching, in response to determining that the first magnification operation triggers entering a second page corresponding to a first virtual object in the magnified first page, directly from displaying the magnified first page to displaying the second page comprises:
in response to determining, based on the first magnification operation, that a magnification factor for magnifying the first page is greater than or equal to a preset threshold and a magnification center of the first magnification operation is located on the first virtual object in the magnified first page,
determining that the first magnification operation triggers entering the second page; and
switching directly from displaying the magnified first page to displaying the second page.

3. The method according to claim 1, wherein the switching, in response to determining that the first magnification operation triggers entering a second page corresponding to a first virtual object in the magnified first page, directly from displaying the magnified first page to displaying the second page comprises:
in response to determining, based on the first magnification operation, that a magnification factor for magnifying the first page is greater than or equal to a preset threshold and a center of the magnified first page is located on the first virtual object,
determining that the first magnification operation triggers entering the second page; and
switching directly from displaying the magnified first page to displaying the second page.

4. The method according to claim 2, further comprising:
determining, in response to the first magnification operation being a magnification operation triggered by two fingers on a screen, a center between the two fingers on the screen as the magnification center of the first magnification operation.

5. The method according to claim 1, wherein the switching, in response to determining that the first magnification operation triggers entering a second page corresponding to a first virtual object in the magnified first page, directly from displaying the magnified first page to displaying the second page comprises:
in response to the first magnification operation not ending after displaying the magnified first page,
displaying the magnified first page with a first transparency and simultaneously displaying the second page with a second transparency, to obtain a transition page, both the first transparency and the second and transparency being lower than 1; and
switching from displaying the transition page to displaying the second page.

6. The method according to claim 1, wherein the second page comprises at least one virtual object in a second virtual scenario, and the method further comprises:
performing, in response to a second magnification operation on the second page, the following processing:
magnifying the second page and displaying a magnified second page; and
switching, in response to determining that the second magnification operation triggers entering a third page corresponding to a second virtual object in the magnified second page, directly from displaying the magnified second page to displaying the third page.

7. The method according to claim 1, wherein the second page comprises at least one virtual object in a second virtual scenario, and the method further comprises:
performing, in response to the first magnification operation not ending and being continuously performed on the second page, the following processing:
magnifying the second page and displaying a magnified second page; and
switching, in response to determining that the continuously performed first magnification operation triggers entering a third page corresponding to a second virtual object in the magnified second page, directly from displaying the magnified second page to displaying the third page.

8. The method according to claim 7, wherein the first magnification operation is a magnification operation triggered by two fingers on a screen, and
the continuously performed first magnification operation indicates that after switching directly from displaying the magnified first page to displaying the second page, the two fingers continue to touch the screen and move on the screen in an opposite direction.

9. The method according to any one of claims 1 to 8, wherein the switching, in response to determining that the first magnification operation triggers entering a second page corresponding to a first virtual object in the magnified first page, directly from displaying the magnified first page to displaying the second page comprises:
displaying, when the first virtual object is a virtual building, the second page corresponding to the virtual building,
the second page being a details page of the virtual building,
the details page of the virtual building comprising a second virtual scenario within the virtual building,
the second virtual scenario comprising a virtual character and/or a virtual object in the virtual building.

10. The method according to any one of claims 1 to 8, wherein the switching, in response to determining that the first magnification operation triggers entering a second page corresponding to a first virtual object in the magnified first page, directly from displaying the magnified first page to displaying the second page comprises:
displaying, when the first virtual object is a virtual character, the second page corresponding to the virtual character,
the second page being a details page of the virtual character,
the details page of the virtual character comprising character information of the virtual character.

11. The method according to claim 6 or 7, further comprising:
performing, in response to a first minification operation on the third page, the following processing:
minifying the third page and displaying a minified third page; and
switching, in response to determining that the first minification operation triggers entering the second page, directly from displaying the minified third page to displaying the second page.

12. The method according to claim 11, wherein the switching, in response to determining that the first minification operation triggers entering the second page, directly from displaying the minified third page to displaying the second page comprises:
in response to determining, based on the first minification operation, that a proportion for minifying the third page is less than or equal to a first preset proportion,
determining that the first minification operation triggers entering the second page; and
switching directly from displaying the minified third page to displaying the second page.

13. The method according to claim 11, further comprising:
performing, in response to the first minification operation not ending and being continuously performed on the second page, the following processing:
minifying the second page and displaying a minified second page; and
switching, in response to determining that the continuously performed first minification operation triggers entering the first page, directly from displaying the minified second page to displaying the first page.

14. A page switching apparatus, comprising:
a first display unit, configured to display a first page, the first page comprising at least one virtual object in a first virtual scenario;
a first processing unit, configured to in response to a first magnification operation on the first page, magnify the first page and display the magnified first page; and
a second processing unit, configured to switch, in response to determining that the first magnification operation triggers entering a second page corresponding to a first virtual object in the magnified first page, directly from displaying the magnified first page to displaying the second page.

15. The apparatus according to claim 14, wherein the second page comprises at least one virtual object in a second virtual scenario, and the apparatus further comprises:
a fourth processing unit, configured to in response to a second magnification operation on the second page, magnify the second page and display a magnified second page; and
a first switching unit, configured to switch, in response to determining that the second magnification operation triggers entering a third page corresponding to a second virtual object in the magnified second page, directly from displaying the magnified second page to displaying the third page.

16. The apparatus according to claim 14, wherein the second page comprises at least one virtual object in a second virtual scenario, and the apparatus further comprises:
a fifth processing unit, configured to: in response to the first magnification operation not ending and being continuously performed on the second page, magnify the second page and display a magnified second page; and
a second switching unit, configured to switch, in response to determining that the continuously performed first magnification operation triggers entering a third page corresponding to a second virtual object in the magnified second page, directly from displaying the magnified second page to displaying the third page.

17. The apparatus according to claim 15 or 16, further comprising:
a second display unit, configured to display the third page;
a sixth processing unit, configured to in response to a first minification operation on the third page, minify the third page and display a minified third page; and
a third display unit, configured to switch, in response to determining that the first minification operation triggers entering the second page, directly from displaying the minified third page to displaying the second page.

18. A computer-readable storage medium, comprising a program stored therein, the program, when run by a processor, performing the method according to any one of claims 1 to 13.

19. A computer program product, comprising a computer program/instructions, the computer program/instructions, when executed by a processor, implementing operations of the method according to any one of claims 1 to 13.

20. An electronic device, comprising a memory and a processor, the memory storing a computer program, the processor being configured to perform the method according to any one of claims 1 to 13 through the computer program.
